# EUROPEAN PATENT SPECIFICATION

(11) **EP 4 342 776 B1**
(45) Date of publication and mention of the grant of the patent: **03.09.2025**
(21) Application number: 23188078.2
(22) Date of filing: 27.07.2023
(51) Int. Cl.: B62J 50/30

(54) **ELECTRIC STRADDLED VEHICLE**
ELEKTRISCHES GRÄTSCHSITZFAHRZEUG
VÉHICULE ÉLECTRIQUE À SELLE

(30) Priority: 20.09.2022 JP 2022149063
(43) Date of publication of application: 27.03.2024
(73) Proprietor: Yamaha Hatsudoki Kabushiki Kaisha, Iwata-shi, Shizuoka 438-8501 (JP)
(72) Inventor: Miyashiro, Shidehiko, Iwata-shi, Shizuoka (JP)
(74) Representative: Grünecker Patent- und Rechtsanwälte PartG mbB

(56) References cited:
- JP-A- H04 151 386
- JP-A- H04 257 783
- KR-A- 20120 056 244
- US-A1- 2013 032 426

## Description

The present invention relates to an electric straddled vehicle according to the preamble of independent claim 1. Such an electric straddled vehicle can be taken from the prior art document JP H04 257 783 A.

There has been conventionally known a type of electric straddled vehicle that includes a case for accommodating a battery, an intake pipe for taking air into the case, and a discharge pipe for discharging gas from the interior of the case (see JP 2021-133711 A).

When the electric straddled vehicle disclosed in JP 2021-133711 A is submerged to the vicinity of an opening of the intake pipe, for instance, it is concerned that water intrudes into the case through the opening of the intake pipe.

It is an object of the present invention to provide an electric straddled vehicle that elevation in internal pressure of a case for accommodating an electric component and intrusion of water into the case can be inhibited. According to the present invention said object is solved by an electric straddled vehicle having the features of independent claim 1. Preferred embodiments are laid down in the dependent claims.

An electric straddled vehicle according to an aspect includes an electric component, a case, a breather hose, and a cap. The case accommodates the electric component. The breather hose includes a first end connected to the case and a second end provided on an opposite side of the first end. The cap having breathable waterproof properties, is attached to the second end of the breather hose.

In the electric straddled vehicle according to the present aspect, the cap, having breathable waterproof properties, is attached to the breather hose; hence, elevation in internal pressure of the case can be inhibited by the breather hose, while intrusion of water into the case through the breather hose can be inhibited.

The second end of the breather hose may be disposed further on an upper side than the case. In this case, when the case is submerged or when the vehicle is washed by high-pressure water, the cap can be inhibited from getting wet by the water; hence, intrusion of the water into the case through the second end of the breather hose can be inhibited. Besides, the cap can be inhibited from being immersed in muddy water in traveling; hence, deterioration in water permeability of the cap can be inhibited.

The electric straddled vehicle may further include a seat on which an operator (rider) is seated. The second end of the breather hose may be disposed further on an upper side than a lower end of the seat. In this case, when the case is submerged or when the vehicle is washed by high-pressure water, the cap can be inhibited from getting wet by the water; hence, intrusion of the water into the case through the second end of the breather hose can be inhibited. Besides, the cap can be inhibited from being immersed in muddy water in traveling; hence, deterioration in water permeability of the cap can be inhibited.

The electric straddled vehicle may further include a front wheel. The second end of the breather hose may be disposed further on an upper side than the front wheel. In this case, when the case is submerged or when the vehicle is washed by high-pressure water, the cap can be inhibited from getting wet by the water; hence, intrusion of the water into the case through the second end of the breather hose can be inhibited. Besides, the cap can be inhibited from being immersed in muddy water in traveling; hence, deterioration in water permeability of the cap can be inhibited.

The electric straddled vehicle may further include a rear wheel. The second end of the breather hose may be disposed further on an upper side than the rear wheel. In this case, when the case is submerged or when the vehicle is washed by high-pressure water, the cap can be inhibited from getting wet by the water; hence, intrusion of the water into the case through the second end of the breather hose can be inhibited. Besides, the cap can be inhibited from being immersed in muddy water in traveling; hence, deterioration in water permeability of the cap can be inhibited.

The electric component may be a power unit including an electric motor and a reducer. In this case, elevation in internal pressure can be inhibited in the case in which a high voltage component is accommodated, while the high voltage component can be inhibited from being immersed in water.

The case may have waterproof properties. In this case, intrusion of water into the case can be inhibited.

The cap includes a pipe, a breathable waterproof sheet, and a lid. The pipe includes a through hole and is attached to the second end of the breather hose. The breathable waterproof sheet closes the through hole of the pipe. The lid is fixed to the pipe and covers at least a portion of the breathable waterproof sheet. In this case, elevation in internal pressure of the case for accommodating the electric component and intrusion of water into the case can be inhibited with a simple configuration.

Overall, according to the present invention, elevation in internal pressure of a case for accommodating an electric component and intrusion of water into the case can be inhibited in an electric straddled vehicle.

### BRIEF DESCRIPTION OF THE DRAWINGS

FIG. 1 is a side view of an electric straddled vehicle.

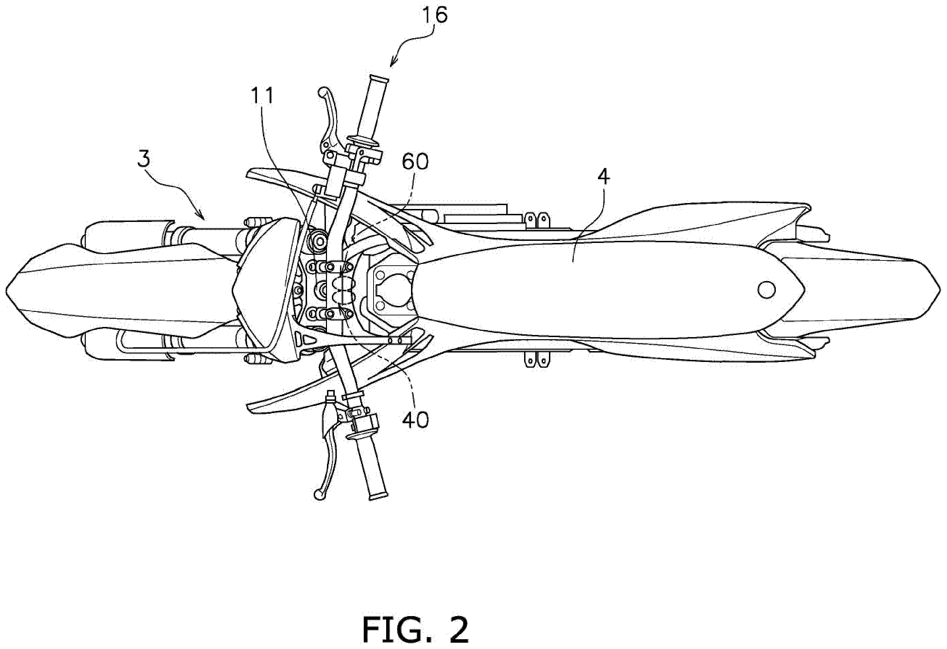

FIG. 2 is a plan view of the electric straddled vehicle.
FIG. 3 is a diagram schematically showing a cross section of a cap and the surroundings thereof.

### DETAILED DESCRIPTION OF EMBODIMENTS

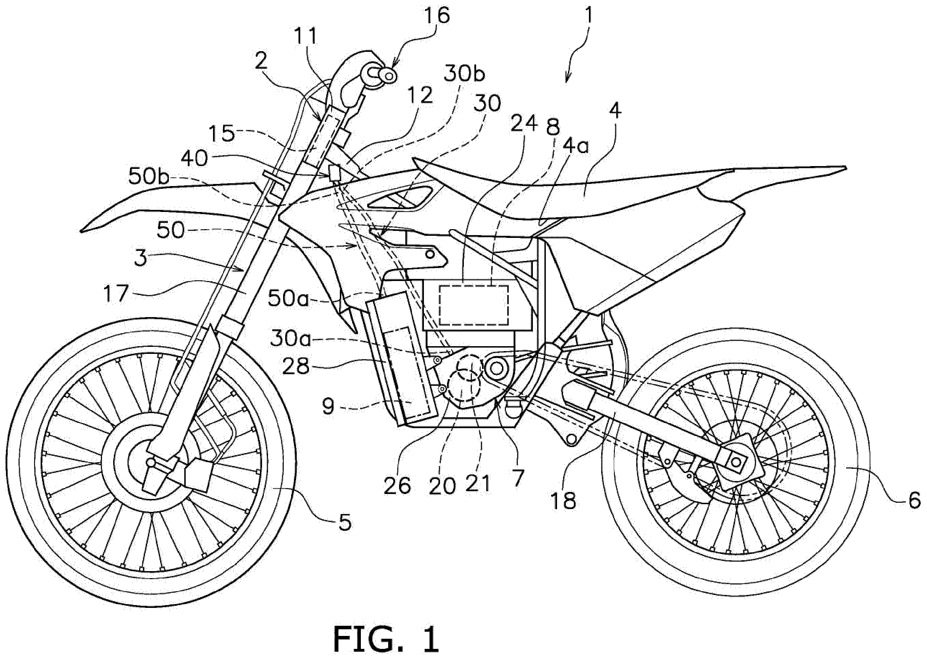

An electric straddled vehicle according to a preferred embodiment will be hereinafter explained with reference to drawings. As shown in FIG. 1, a straddled vehicle 1 is a straddled vehicle of an off-road type. It should be noted that in the following explanation, terms indicating such directions as "back and forth" as the vehicle back-and-forth direction, "up and down" as the vehicle up-and-down direction and "right and left" as the vehicle right and left direction are explained based on directions seen from a rider in operation of the straddled vehicle. For example, in the present preferred embodiment, the vehicle right-and-left direction is synonymous with a vehicle width direction.

The straddled vehicle 1 includes a vehicle body frame 2, a steering device 3, a seat 4, a front wheel 5, a rear wheel 6, a power unit 7, a battery 8, and a motor control unit 9.

The vehicle body frame 2 includes a head pipe 11 and a main frame 12. The head pipe 11 extends forward and downward from the upper end thereof to the lower end thereof in a vehicle side view. The head pipe 11 is disposed in the middle of the vehicle in the vehicle width direction. The main frame 12 is connected to the head pipe 11. The main frame 12 extends rearward from the head pipe 11.

The steering device 3 is supported by the head pipe 11 so as to be turnable. The steering device 3 supports the front wheel 5 such that the front wheel 5 is made rotatable. The steering device 3 includes a steering shaft 15, a handle member 16, and a front fork 17. The steering shaft 15 is inserted into the head pipe 11. The handle member 16 is disposed further on the upper side than the head pipe 11 and is connected to the steering shaft 15. The front fork 17 is connected to the steering shaft 15. The front fork 17 supports the front wheel 5 such that the front wheel 5 is made rotatable.

The seat 4 is disposed behind the head pipe 11, while being disposed directly above the main frame 12. The front wheel 5 is supported by the front fork 17 so as to be rotatable. The rear wheel 6 is supported by the main frame 12 through a swing arm 18 so as to be rotatable. The rear wheel 6 is rotated by a drive force generated by the power unit 7.

The power unit 7 is an example of electric component. The power unit 7 is attached to the vehicle body frame 2. The power unit 7 drives the rear wheel 6 through, for instance, a chain. The power unit 7 includes an electric motor 20 and a reducer 21. The electric motor 20 is an example of electric component. The electric motor 20 is driven by electric power supplied thereto from the battery 8. The reducer 21 reduces the speed of rotation of the electric motor 20.

The battery 8 is disposed directly above the power unit 7. The battery 8 supplies the electric power to the electric motor 20. The battery 8 is accommodated in a battery case 24 disposed directly above the power unit 7.

The motor control unit 9 is attached to the vehicle body frame 2. The motor control unit 9 is electrically connected to the electric motor 20 so as to control the electric motor 20. For example, the motor control unit 9 includes a circuit board (not shown in the drawings) on which a processor, a memory, and so forth are mounted.

The straddled vehicle 1 further includes a first case 26, a second case 28, a breather hose 30, and a cap 40.

The first case 26 accommodates the electric motor 20 and the reducer 21. The first case 26 has waterproof properties. The second case 28 accommodates the motor control unit 9. The second case 28 has waterproof properties. The second case 28 is disposed in front of the first case 26. It should be noted that each of the first and second cases 26 and 28 is an example of case.

The breather hose 30 is made in shape of a tube. The breather hose 30 extends approximately in the up-and-down direction in the vehicle side view. The breather hose 30 is connected to the first case 26. The breather hose 30 extends from an upper portion of the first case 26 toward the head pipe 11. The breather hose 30 is disposed at least in part further on the front side than the battery case 24. The breather hose 30 is supported by, for instance, the vehicle body frame 2 through a hose clamp and/or so forth.

The breather hose 30 includes a first end 30a and a second end 30b. Thus the breather hose 30 extends from the first end 30a to the second end 30b. The first end 30a is connected to the first case 26. The second end 30b is an end provided on the opposite side of the first end 30a. The second end 30b is disposed further on the upper side than the first end 30a. The second end 30b is disposed further on the front side than the first end 30a.

The second end 30b is disposed further on the rear side than the head pipe 11, while being disposed further on the front side than the seat 4. The second end 30b is disposed further on the upper side than the first case 26. The second end 30b is disposed further on the upper side than the battery case 24. The second end 30b is disposed further on the upper side than the second case 28. The second end 30b is disposed further on the upper side than a lower end 4a of the seat 4. The second end 30b is disposed further on the upper side than the front wheel 5. The second end 30b is disposed further on the upper side than the rear wheel 6.

The cap 40 has breathable waterproof properties. The cap 40 is attached to the second end 30b of the breather hose 30. The cap 40 overlaps with the steering device 3 in a vehicle plan view. The cap 40 may be disposed further on the rear side than the steering device 3, or alternatively, may be disposed further on the rear side than a handlebar.

The cap 40 is disposed further on the rear side than the head pipe 11, while being disposed further on the front side than the seat 4. The cap 40 is disposed further on the upper side than the first case 26. The cap 40 is disposed further on the upper side than the battery case 24. The cap 40 is disposed further on the upper side than the lower end 4a of the seat 4. The cap 40 is disposed further on the upper side than the front wheel 5. The cap 40 is disposed further on the upper side than the rear wheel 6.

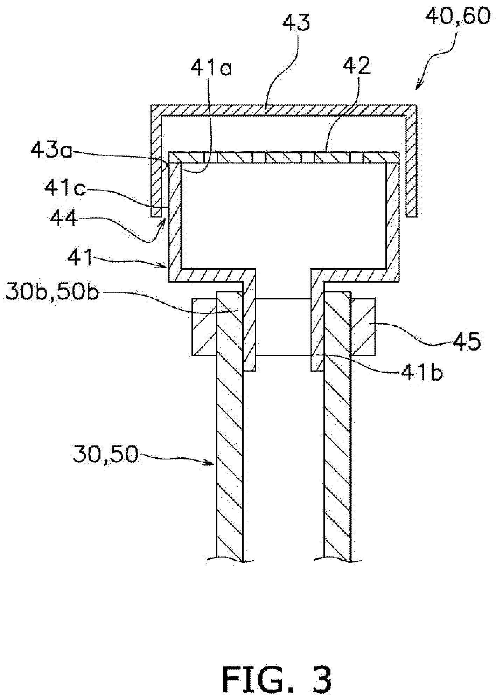

As shown in FIG. 3, the cap 40 includes a pipe 41, a breathable waterproof sheet 42, a lid 43, and a vent hole 44. The pipe 41 is made in shape of a tube and is made of, for instance, a resin material. The pipe 41 is attached to the second end 30b of the breather hose 30. The pipe 41 includes a through hole 41a and a fixed portion 41b. The through hole 41a is provided on one end of the pipe 41, whereas the fixed portion 41b is provided on the other end of the pipe 41. The through hole 41a is opened upward. The outer diameter of the fixed portion 41b is lesser than the inner diameter of the through hole 41a. The outer diameter of the fixed portion 41b is lesser than the inner diameter of the second end 30b of the breather hose 30. The fixed portion 41b is fixed to the breather hose 30 by a band member 45, while being inserted into an inner peripheral part of the second end 30b of the breather hose 30. It should be noted that the second end 30b of the breather hose 30 may be configured to be inserted and fixed into an inner peripheral part of the fixed portion 41b.

The breathable waterproof sheet 42 closes the through hole 41a of the pipe 41. The breathable waterproof sheet 42 has both breathable properties and waterproof properties. For example, the breathable waterproof sheet 42 is a member made in shape of a film in which a large number of minute pores are perforated.

The lid 43 is made of, for instance, a resin material. The lid 43 is fixed to the one end of the pipe 41. The lid 43 covers an outer peripheral surface 41c of the one end of the pipe 41. The lid 43 is fixed to the outer peripheral surface 41c of the pipe 41. As shown in FIG. 3, a portion of an inner peripheral surface 43a of the lid 43 opposed to the outer peripheral surface 41c of the pipe 41 is separated from the outer peripheral surface 41c of the pipe 41. The lid 43 covers at least a portion of the breathable waterproof sheet 42. In the present preferred embodiment, the lid 43 covers the entirety of the breathable waterproof sheet 42. A gap is produced between the lid 43 and the breathable waterproof sheet 42.

The vent hole 44 is composed by a gap between the outer peripheral surface 41c of the pipe 41 and the inner peripheral surface 43a of the lid 43. The vent hole 44 makes the inside and the outside of the cap 40 communicate with each other therethrough.

The straddled vehicle 1 further includes a breather hose 50 and a cap 60. The breather hose 50 is connected to the second case 28. The breather hose 50 includes a first end 50a and a second end 50b. Thus the breather hose 50 extends from the first end 50a to the second end 50b. The breather hose 50 is comparable to the breather hose 30 except for a configuration of the breather hose 50 connected to the second case 28; hence, detailed explanation of the breather hose 50 will be omitted.

The cap 60 is attached to the second end 50b of the breather hose 50. The cap 60 is aligned with the cap 40 in the right-and-left direction. The cap 60 is comparable to the cap 40 except for the configuration of the cap 60 attached to the second end 50b of the breather hose 50; hence, detailed explanation of the cap 60 will be omitted.

In the straddled vehicle 1 according to the present aspect, the cap 40, having breathable waterproof properties, is attached to the breather hose 30; hence, elevation in internal pressure of the first case 26 storing the motor control unit 9 as a high voltage component can be inhibited by the breather hose 30, while intrusion of water into the first case 26 through the breather hose 30 can be inhibited.

The second end 30b of the breather hose 30 is disposed further on the upper side than the first case 26, the lower end 4a of the seat 4, the front wheel 5, and the rear wheel 6; hence, when the first case 26 is submerged or when the vehicle is washed by high-pressure water, the cap 40 can be inhibited from getting wet by the water. Accordingly, intrusion of water into the first case 26 through the second end 30b of the breather hose 30 can be inhibited. Besides, the cap 40 can be inhibited from being immersed in muddy water in traveling; hence, it is possible to inhibit occurrence of such a situation that the breathable waterproof sheet 42 of the cap 40 is clogged by the muddy water, whereby water permeability of the cap 40 is deteriorated.

It should be noted that elevation in internal pressure of the second case 28 can be inhibited by the cap 60 attached to the breather hose 50, while intrusion of water into the second case 28 through the second end 50b of the breather hose 50 can be inhibited. Besides, the cap 60 can be inhibited from being immersed in muddy water in traveling.

In the preferred embodiment described above, the combination of the breather hose 30 and the cap 40 may be omitted from the combinations of the breather hose 30, 50 and the cap 40, 60; alternatively, the combination of the breather hose 50 and the cap 60 may be omitted therefrom.

The battery case 24 may be provided with constituent elements corresponding to the breather hose 30 and the cap 40. In this case, the battery 8 is regarded as an example of electric component.

The second end 30b of the breather hose 30 may be changed in positional arrangement. The second end 30b of the breather hose 30 may be disposed at an approximately equal height to the first case 26 in the up-and-down direction. The second end 30b of the breather hose 30 may be disposed further on the lower side than the lower end 4a of the seat 4. In a comparable manner to the above, the second end 50b of the breather hose 50 may be changed in positional arrangement.

The cap 40, 60 may be changed in shape. The lid 43 may be omitted. The vent hole 44 may be changed in shape and/or positional arrangement.

### REFERENCE SIGNS LIST

- 1: Straddled vehicle
- 4: Seat
- 5: Front wheel
- 6: Rear wheel
- 7: Power unit
- 20: Electric motor
- 21: Reducer
- 26: First case (example of case)
- 28: Second case (example of case)
- 30, 50: Breather hose
- 30a, 50a: First end
- 30b, 50b: Second end
- 40, 60: Cap
- 41: Pipe
- 41a: Through hole
- 42: Breathable waterproof sheet
- 43: Lid

## Claims

1. An electric straddled vehicle (1) comprising:
an electric component (7, 8, 20);
a case (26, 28) accommodating the electric component (7, 8, 20);
a breather hose (30, 50) including a first end (30a, 50a) and a second end (30b, 50b), the first end (30a, 50a) connected to the case (26, 28), the second end (30b, 50b) is provided on an opposite side of the first end (30a, 50a) with regard to an extension of the breather hose (30, 50); and
a cap (40, 60) attached to the second end (30b, 50b) of the breather hose (30, 50), the cap (40, 60) having breathable waterproof properties, **characterized in that** the cap (40, 60) includes
a pipe (41) including a through hole (41a), the pipe (41) is attached to the second end (30b, 50b) of the breather hose (30, 50),
a breathable waterproof sheet (42) closing the through hole (41a) of the pipe (41), and
a lid (43) fixed to the pipe (41), the lid (43) is covering at least a portion of the breathable waterproof sheet (42).

2. The electric straddled vehicle (1) according to claim 1, **characterized in that** the second end (30b, 50b) of the breather hose (30, 50) is disposed further on an upper side than the case (26, 28) ) with regard to a vehicle up-and-down direction.

3. The electric straddled vehicle (1) according to claim 1 or 2, **characterized by**:
a seat (4) configured for a rider to sit on, wherein
the second end (30b, 50b) of the breather hose (30, 50) is disposed further on an upper side than a lower end (4a) of the seat (4) with regard to a vehicle up-and-down direction.

4. The electric straddled vehicle (1) according to any one of claims 1 to 3, **characterized by**:
a front wheel (5), wherein
the second end (30b, 50b) of the breather hose (30, 50) is disposed further on an upper side than the front wheel (5) with regard to a vehicle up-and-down direction.

5. The electric straddled vehicle (1) according to any one of claims 1 to 4, **characterized by:**
a rear wheel (6), wherein
the second end (30b, 50b) of the breather hose (30, 50) is disposed further on an upper side than the rear wheel (6) with regard to a vehicle up-and-down direction.

6. The electric straddled vehicle (1) according to any one of claims 1 to 5, **characterized in that** the electric component is a power unit (7) including an electric motor (20) and a reducer (21).

7. The electric straddled vehicle (1) according to any one of claims 1 to 6, **characterized in that** the case (26, 28) has waterproof properties.

8. The electric straddled vehicle (1) according to any one of claims 1 to 7, **characterized in that** the pipe (41) is made in shape of a tube.

9. The electric straddled vehicle (1) according to any one of claims 1 to 8, **characterized in that** the pipe (41) includes the through hole (41a) and a fixed portion (41b), the through hole (41a) is provided on one end of the pipe (41), whereas the fixed portion (41b) is provided on the other end of the pipe (41) and the fixed portion (41b) is fixed to the second end (30b, 50b) of the breather hose (30, 50).

10. The electric straddled vehicle (1) according to claim 9, **characterized in that** an outer diameter of the fixed portion (41b) is lesser than an inner diameter of the through hole (41a), and the outer diameter of the fixed portion (41b) is lesser than an inner diameter of the second end (30b, 50b) of the breather hose (30, 50).

11. The electric straddled vehicle (1) according to any one of claims 1 to 10, **characterized in that** the lid (43) covers an outer peripheral surface (41c) of the one end of the pipe (41), and the lid (43) is fixed to the outer peripheral surface (41c) of the pipe (41).

12. The electric straddled vehicle (1) according to claim 11, **characterized in that** a portion of an inner peripheral surface (43a) of the lid (43) opposed to the outer peripheral surface (41c) of the pipe (41) is separated from the outer peripheral surface (41c) of the pipe (41) so that a vent hole (44) is composed by a gap between the outer peripheral surface (41c) of the pipe (41) and the inner peripheral surface (43a) of the lid (43).

13. The electric straddled vehicle (1) according to any one of claims 1 to 12, **characterized in that** a gap is produced between the lid (43) and the breathable waterproof sheet (42).

## Patentansprüche

1. Ein Elektro-Spreizsitzfahrzeug (1), das umfasst:
eine Elektro-Komponente (7, 8, 20);
ein Gehäuse (26, 28), das die Elektro-Komponente (7, 8, 20) aufnimmt;
einen Entlüftungsschlauch (30, 50) mit einem ersten Ende (30a, 50a) und einem zweiten Ende (30b, 50b), das erste Ende (30a, 50a) ist mit dem Gehäuse (26, 28) verbunden, das zweite Ende (30b, 50b) ist auf einer dem ersten Ende (30a, 50a) gegenüberliegenden Seite in Bezug auf eine Verlängerung des Entlüftungsschlauchs (30, 50) vorgesehen; und
eine Kappe (40, 60), die an dem zweiten Ende (30b, 50b) des Entlüftungsschlauchs (30, 50) angebracht ist, die Kappe (40, 60) weist atmungsaktive, wasserdichte Eigenschaften auf, **dadurch gekennzeichnet, dass** die Kappe (40, 60) umfasst
ein Rohr (41) mit einem Durchgangsloch (41a), das Rohr (41) ist an dem zweiten Ende (30b, 50b) des Entlüftungsschlauchs (30, 50) befestigt,
eine atmungsaktive, wasserdichte Folie (42), die das Durchgangsloch (41a) des Rohrs (41) verschließt, und
einen Deckel (43), der an dem Rohr (41) befestigt ist, der Deckel (43) deckt zumindest einen Teil der atmungsaktiven, wasserdichten Folie (42) ab.

2. Das Elektro-Spreizsitzfahrzeug (1) nach Anspruch 1, **dadurch gekennzeichnet, dass** das zweite Ende (30b, 50b) des Entlüftungsschlauchs (30, 50) weiter zu einer Oberseite als das Gehäuse (26, 28) ) in Bezug auf eine Fahrzeug-Auf-und-Ab-Richtung angeordnet ist.

3. Das Elektro-Spreizsitzfahrzeug (1) nach Anspruch 1 oder 2, **gekennzeichnet durch:**
einen Sitz (4), der so gestaltet ist, dass ein Fahrer darauf sitzen kann, wobei
das zweite Ende (30b, 50b) des Entlüftungsschlauchs (30, 50) weiter zu einer Oberseite als ein unteres Ende (4a) des Sitzes (4) in Bezug auf eine Fahrzeug-Auf-und-Ab-Richtung angeordnet ist.

4. Das Elektro-Spreizsitzfahrzeug (1) nach irgendeinem der Ansprüche 1 bis 3, **gekennzeichnet durch:**
ein Vorderrad (5), wobei
das zweite Ende (30b, 50b) des Entlüftungsschlauchs (30, 50) weiter zu einer Oberseite als das Vorderrad (5) in Bezug auf eine Fahrzeug-Auf-und-Ab-Richtung angeordnet ist.

5. Das Elektro-Spreizsitzfahrzeug (1) nach irgendeinem der Ansprüche 1 bis 4, **gekennzeichnet durch:**
ein Hinterrad (6), wobei
das zweite Ende (30b, 50b) des Entlüftungsschlauchs (30, 50) weiter zu einer Oberseite als das Hinterrad (6) in Bezug auf eine Fahrzeug-Auf-und-Ab-Richtung angeordnet ist.

6. Das Elektro-Spreizsitzfahrzeug (1) nach irgendeinem der Ansprüche 1 bis 5, **dadurch gekennzeichnet, dass** die Elektro-Komponente eine Antriebseinheit (7) mit einem Elektromotor (20) und einer Untersetzung (21) ist.

7. Das Elektro-Spreizsitzfahrzeug (1) nach irgendeinem der Ansprüche 1 bis 6, **dadurch gekennzeichnet, dass** das Gehäuse (26, 28) wasserdichte Eigenschaften aufweist.

8. Das Elektro-Spreizsitzfahrzeug (1) nach irgendeinem der Ansprüche 1 bis 7, **dadurch gekennzeichnet, dass** das Rohr (41) in Form eines Schlauches ausgeführt ist.

9. Das Elektro-Spreizsitzfahrzeug (1) nach irgendeinem der Ansprüche 1 bis 8, **dadurch gekennzeichnet, dass** das Rohr (41) das Durchgangsloch (41a) und einen festen Abschnitt (41b) aufweist, das Durchgangsloch (41a) an einem Ende des Rohres (41) vorgesehen ist, während der feste Abschnitt (41b) am anderen Ende des Rohres (41) vorgesehen ist und der feste Abschnitt (41b) am zweiten Ende (30b, 50b) des Entlüftungsschlauches (30, 50) befestigt ist.

10. Das Elektro-Spreizsitzfahrzeug (1) nach Anspruch 9, **dadurch gekennzeichnet, dass** ein Außendurchmesser des festen Abschnitts (41b) kleiner ist als ein Innendurchmesser des Durchgangslochs (41a), und der Außendurchmesser des festen Abschnitts (41b) kleiner ist als ein Innendurchmesser des zweiten Endes (30b, 50b) des Entlüftungsschlauchs (30, 50).

11. Das Elektro-Spreizsitzfahrzeug (1) nach irgendeinem der Ansprüche 1 bis 10, **dadurch gekennzeichnet, dass** der Deckel (43) eine äußere Umfangsfläche (41c) des einen Endes des Rohrs (41) abdeckt und der Deckel (43) an der äußeren Umfangsfläche (41c) des Rohrs (41) befestigt ist.

12. Das Elektro-Spreizsitzfahrzeug (1) nach Anspruch 11, **dadurch gekennzeichnet, dass** ein Abschnitt einer inneren Umfangsfläche (43a) des Deckels (43), der der äußeren Umfangsfläche (41c) des Rohrs (41) gegenüberliegt, von der äußeren Umfangsfläche (41c) des Rohrs (41) getrennt ist, so dass ein Entlüftungsloch (44) durch einen Spalt zwischen der äußeren Umfangsfläche (41c) des Rohrs (41) und der inneren Umfangsfläche (43a) des Deckels (43) gebildet wird.

13. Das Elektro-Spreizsitzfahrzeug (1) nach irgendeinem der Ansprüche 1 bis 12, **dadurch gekennzeichnet, dass** zwischen dem Deckel (43) und der atmungsaktiven, wasserdichten Folie (42) ein Spalt gebildet ist.

## Revendications

1. Véhicule électrique à selle (1) comprenant :
un composant électrique (7, 8, 20) ;
un boîtier (26, 28) accueillant le composant électrique (7, 8, 20) ;
un tuyau de reniflard (30, 50) comprenant une première extrémité (30a, 50a) et une seconde extrémité (30b, 50b), la première extrémité (30a, 50a) étant reliée au boîtier (26, 28), la seconde extrémité (30b, 50b) étant prévue sur un côté opposé à la première extrémité (30a, 50a) en ce qui concerne une extension du tuyau de reniflard (30, 50) ; et
un capuchon (40, 60) fixé à la seconde extrémité (30b, 50b) du tuyau de reniflard (30, 50), le capuchon (40, 60) ayant des propriétés respirantes et imperméables, **caractérisé en ce que** le capuchon (40, 60) comprend
un tuyau (41) comprenant un trou de passage (41a), le tuyau (41) étant fixé à la seconde extrémité (30b, 50b) du tuyau de reniflard (30, 50),
une feuille imperméable respirante (42) fermant le trou de passage (41a) du tuyau (41), et
un capot (43) fixé au tuyau (41), le capot (43) recouvrant au moins une partie de la feuille imperméable respirante (42).

2. Véhicule électrique à selle (1) selon la revendication 1, **caractérisé en ce que** la seconde extrémité (30b, 50b) du tuyau de reniflard (30, 50) est disposée sur un côté supérieur, plus loin que le boîtier (26, 28)) par rapport à une direction de montée et de descente du véhicule.

3. Véhicule électrique à selle (1) selon les revendications 1 ou 2, **caractérisé par:**
un siège (4) configuré pour que le conducteur puisse s'y asseoir, dans lequel la seconde extrémité (30b, 50b) du tuyau de reniflard (30, 50) est disposée sur un côté supérieur, plus loin que l'extrémité inférieure (4a) du siège (4) par rapport à la direction de montée et de descente du véhicule.

4. Véhicule électrique à selle (1) selon l'une quelconque des revendications 1 à 3, **caractérisé par** :
une roue avant (5), dans laquelle
la seconde extrémité (30b, 50b) du tuyau de reniflard (30, 50) est disposée sur un côté supérieur, plus loin que la roue avant (5) par rapport à une direction de montée et de descente du véhicule.

5. Véhicule électrique à selle (1) selon l'une quelconque des revendications 1 à 4, **caractérisé par** :
une roue arrière (6), dans laquelle
la seconde extrémité (30b, 50b) du tuyau de reniflard (30, 50) est disposée sur un côté supérieur, plus loin que la roue arrière (6) par rapport à une direction de montée et de descente du véhicule.

6. Véhicule électrique à selle (1) selon l'une quelconque des revendications 1 à 5, **caractérisé en ce que** le composant électrique est une unité de puissance (7) comprenant un moteur électrique (20) et un réducteur (21).

7. Véhicule électrique à selle (1) selon l'une quelconque des revendications 1 à 6, **caractérisé en ce que** le boîtier (26, 28) a des propriétés imperméables.

8. Véhicule électrique à selle (1) selon 'une quelconque des revendications 1 à 7, **caractérisé en ce que** le tuyau (41) a la forme d'un tube.

9. Véhicule électrique à selle (1) selon l'une quelconque des revendications 1 à 8, **caractérisé en ce que** le tuyau (41) comprend le trou traversant (41a) et une partie fixe (41b), le trou traversant (41a) est prévu à une extrémité du tuyau (41), tandis que la partie fixe (41b) est prévue à l'autre extrémité du tuyau (41) et la partie fixe (41b) est fixée à la seconde extrémité (30b, 50b) du tuyau de reniflard (30, 50).

10. Véhicule électrique à selle (1) selon la revendication 9, **caractérisé par le fait qu'**un diamètre extérieur de la partie fixe (41b) est inférieur à un diamètre intérieur du trou de passage (41a), et que le diamètre extérieur de la partie fixe (41b) est inférieur à un diamètre intérieur de la seconde extrémité (30b, 50b) du tuyau de reniflard (30, 50).

11. Véhicule électrique à selle (1) selon l'une quelconque des revendications 1 à 10, **caractérisé en ce que** le capot (43) recouvre une surface périphérique extérieure (41c) de l'une des extrémités du tuyau (41), et **en ce que** le capot (43) est fixé à la surface périphérique extérieure (41c) du tuyau (41).

12. Véhicule électrique à selle (1) selon la revendication 11, **caractérisé en ce qu'**une partie d'une surface périphérique intérieure (43a) du capot (43) opposée à la surface extérieure (41c) du tuyau (41) est séparée de la surface périphérique extérieure (41c) du tuyau (41) de sorte qu'un trou d'aération (44) est composé d'un espace entre la surface périphérique extérieure (41c) du tuyau (41) et la surface périphérique intérieure (43a) du capot (43).

13. Véhicule électrique à selle (1) selon l'une quelconque des revendications 1 à 12, **caractérisé en ce qu'**un espace est créé entre le capot (43) et la feuille imperméable respirante (42).
